Europäisches Patentamt

European Patent Office

Office européen des brevets

(19)

(11) **EP 1 280 364 A1**

(12) **EUROPÄISCHE PATENTANMELDUNG**

(43) Veröffentlichungstag:
**29.01.2003 Patentblatt 2003/05**

(51) Int Cl.⁷: **H04Q 3/00**, H04B 7/185,
H04Q 7/38

(21) Anmeldenummer: **01118355.5**

(22) Anmeldetag: **27.07.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **SIEMENS AKTIENGESELLSCHAFT**
**80333 München (DE)**

(72) Erfinder: **Schlapansky, Ferdinand**
**1090 Wien (AT)**

(54) **Verfahren, Kommunikationssystem und Kommunikationsvorrichtung zum Verbessern der Zuweisung von Ressourcen**

(57)     Die Erfindung bezieht sich auf Verfahren zum Zuweisen von Ressourcen für eine Kommunikations-verbindung (V;UL;DL) in einem Kommunikationssy-stem, insbesondere einem Funk-Kommunikationssy-stem, bei dem eine erste Station, insbesondere ein Ter-minal (T) auf einen dort bestehenden Verbindungs-wunsch oder neuerlichen Ressourcenwunsch für eine bereits bestehende Verbindung hin über eine Schnitt-stelle (V;UL;DL) eine Verbindungs- oder Kapazitätsan-forderung zu einer mit dieser kommunikationsfähigen zweiten Station (AP) überträgt und nach dem Empfang der Verbindungs- oder Kapazitätsanforderung von der Seite der zweiten station (AP) in Abhängigkeit von der Auslastung der verfügbaren Ressourcen entweder der Verbindungswunsch zurückgewiesen wird oder Res-sourcen für die angeforderte Kommunikationsverbin-dung (V;UL;DL) zugewiesen werden.

## Fig. 1

EP 1 280 364 A1

**Beschreibung**

Die Erfindung bezieht sich auf ein Verfahren zum Zuweisen von Ressourcen in einem Kommunikationssystem, insbesondere einem Funk-Kommunikationssystem, gemäß den oberbegrifflichen Merkmalen des Patentanspruchs 1 sowie ein Kommunikationssystem bzw. eine Kommunikationsvorrichtung zum Durchführen eines solchen Verfahrens.

Bei Funk-Kommunikationssystemen, wie beispielsweise dem GSM oder dem UMTS (GSM: Global System for Mobile Communication; UMTS: Universal Mobile Telecommunication System) kommuniziert eine Vielzahl in der Regel mobiler Stationen bzw. Terminals mit ortsfesten Netzstationen. Vergleichbar zu diesen terrestrischen Systemen ist ein Satelliten gestütztes Funk-Kommunikationssystem. Damit einzelne Terminals mit den Netzstationen kommunizieren können, wird diesen eine zeitweilige Netz-Ressource zugewiesen. Dies kann beispielsweise ein Zeitkanal oder Frequenzkanal sein. Bei Terminals, die moderne Dienste unterstützen, kann ein einzelnes Terminal auch mehrere Verbindungen parallel aufbauen bzw. unterhalten. Diese verschiedenen Verbindungen dienen insbesondere zum gleichzeitigen Betreiben verschiedener Dienste (Services). Jeder Verbindungswunsch an einem Terminal wird dabei durch seine Spitzen-Datenrate (PDR: Peak Data Rate) in Vorwärts- und Rückwärtsrichtung charakterisiert. Zeitschlitze für eine Verbindung werden entsprechend der Spitzen-Datenrate zugewiesen. Die Zuweisung der Zeitschlitze erfolgt bei CBR-Diensten (CBR: Constant Bit Rate), d.h. Diensten mit konstanter Bitrate für die gesamte Dauer der Verbindung, bei Echtzeit-Diensten mit variabler Bitrate (Real Time VBR) sowie bei Nicht-Echtzeit-Diensten mit variabler Bitrate (non real-time VBR) für eine gewisse On-Periode, also für eine gewisse Zeitdauer, in der dem Terminal eine Kommunikation mit der Netzeinrichtung ermöglicht werden soll. Zum Ende der zugewiesenen On-Periode werden die Zeitschlitze wieder freigegeben und stehen anderen Verbindungen zur Verfügung (Off-Periode). Die Verbindung kann jedoch auch weiterhin bestehen bleiben, wobei neuerliche Kapazitätsanforderungen für die bereits bestehende Verbindung gemacht werden können. Üblicherweise werden bei Satellitenzugriff über MF-TDMA (Multiple Frequency-Time Division-Multiple Access) mehrere Terminals derselben Dienste-Trägergruppe (SCG: Service Carrier Group) oder Aufwärtsverbindungs-Trägergruppe (UCG: Uplink Carrier Group) per Konfiguration zugeordnet. Beim Mobilfunk entspricht dies z. B. der Zahl der Terminals, die sich in einer Zelle befinden.

Der Vergabe von Verkehrskanälen liegen üblicherweise Verfahren zugrunde, die darauf abzielen, dass die Verkehrsauslastung des Netzes ein Maximum erreicht, wobei gleichzeitig die Zahl der abgewiesenen Verbindungswünsche ein Minimum erreicht. Dies erfolgt unter Beachtung eines gewissen Wertes für die Datenverlust-Wahrscheinlichkeit. Bei Funk-Telekommunikationsnetzen tritt das zusätzliche Problem auf, dass vor dem Akzeptieren eines Verbindungswunsches oder einer neuerlichen Kapazitätsanforderung ein umfangreicher Austausch von Signalisierungsnachrichten zwischen dem Terminal, das die Verbindung aufbauen möchte, und der üblicherweise zentralen Instanz, beispielsweise einem Netz-Steuerzentrum, das die Vergabe von Verkehrskanälen steuert, erforderlich ist. Dabei treten je nach Distanz zwischen Terminal und Netz-Steuerzentrum beträchtliche Verzögerungen auf, was insbesondere auch bei Satellitennetzen ein Problem darstellt.

Die Aufgabe der Erfindung besteht darin, ein Verfahren, ein Kommunikationssystem bzw. eine Kommunikationsvorrichtung vorzuschlagen, die eine verbesserte Zuweisung von Ressourcen ermöglichen.

Diese Aufgabe wird durch ein Verfahren zum Zuweisen von Ressourcen, ein Kommunikationssystem und durch eine Kommunikationsvorrichtung mit den jeweiligen Merkmalen der unabhängigen Patentansprüche gelöst.

Wesentliche Vorteile bestehen darin, dass der Signalisierungsverkehr zwischen einem Terminal und einem Zugriffspunkt bzw. Netz-Steuerzentrum reduziert wird, da Verbindungswünsche und neuerliche Kapazitätsanforderungen für eine bereits bestehende Verbindung nach Ablauf einer Off-Periode insbesondere für Nicht-Echtzeit-Dienste mit variabler Bitrate bereits im Terminal abgewiesen werden können. Eine zusätzliche Signalisierung zwischen z.B. Terminal und Satellit oder Netz-Steuerzentrum ist nicht erforderlich, wenn vorhandene Signalisierungsnachrichten zur Übermittlung eines Auslastungsgrades verwendet werden. Durch die entfallende zusätzliche Signalisierung wird auch die Anwortzeit für den Anwender eines Terminals oder eines am Terminal befindlichen Endgerätes reduziert, da dieser schneller eine Aussage darüber erhält, ob sein Verbindungswunsch oder die Kapazitätsanforderung akzeptiert werden kann oder nicht.

Vorteilhafte Ausgestaltungen sind Gegenstand von abhängigen Ansprüchen.

Zweckmäßigerweise wird der Verbindungswunsch oder die Kapazitätsanforderung im Fall der Bestimmung, dass die Zuweisung der erforderlichen Ressourcen nicht oder nicht ausreichend wahrscheinlich erfolgen wird, bereits von der ersten Station bzw. dem Terminal zurückgewiesen, so dass der Benutzer des Terminals bis zur Zurückweisung weniger lange warten muss.

Beim Bestimmungsschritt für angeforderte Verbindungen oder Kapazitäten für bestimmte Dienste verschiedenen Diensten verschiedene Auslastungsgrade zuzuordnen, bei denen die Zuweisung der erforderlichen Ressourcen erfolgen bzw. nicht erfolgen wird, ermöglicht auch eine Priorisierung. Dabei kann eine Vielzahl zusätzlicher Auslastungsgrade definiert werden. Auch eine zeitlich abhängige Priorisierung ist möglich, wobei beispielsweise die Priorität für einen geforderten Dienst nach einer gewissen erfolglosen Wartezeit erhöht werden kann, um eine Verbindung ermöglichen zu können.

Die Information über den Auslastungsgrad als Zahlenwert oder als codierte Information auszusenden, ermöglicht einerseits genaue Berechnungen, andererseits aber Ressourcen schonende Übertragungen und Handhabungen von festen Werten oder Bitinformationen, die für bestimmte Auslastungsbereiche stellvertretend sind.

Die Information über den Auslastungsgrad in der ersten Station zeitweilig abzuspeichern und bis zum Empfang einer aktuelleren Information über den Auslastungsgrad für den Bestimmungsschritt zu verwenden, ermöglicht vorteilhafterweise in der ersten Station bzw. im Terminal momentane Auslastungsgrad-Werte, z.B. für Aufwärtsverbindungs-Trägergruppen/Dienste-Trägergruppen und/oder Aufwärtsverbindungen bzw. Abwärtsverbindungen, abzuspeichern, um auf Verbindungswünsche sofort reagieren zu können und nicht einen erneuten Empfang eines Auslastungsgrades abwarten zu müssen.

In der ersten Station zu überprüfen, ob die Summe der erforderlichen Ressourcen für alle aktiven und angeforderten Verbindungen kleiner oder gleich der gesamten für die erste Station verfügbaren Ressourcen ist, ermöglicht auch eine effiziente Verwaltung von Stationen, die mehrere parallele Verbindungen aufrecht halten. Insbesondere kann verhindert werden, dass nach dem Aufbau einer zusätzlichen Verbindung plötzlich Kapazität für eine höher priorisierte oder bereits bestehende andere Verbindung fehlt und diese dann bei einer erneuten Übertragung von Daten ausfällt.

Die Information über den Auslastungsgrad als Quotient der verwendeten Ressourcen und der verfügbaren Ressourcen, insbesondere unter Berücksichtigung der Summe aller Spitzen-Datenraten der aktiven Verbindungen zu bestimmen, bietet ein einfaches Kriterium zum Realisieren des Verfahrens.

Bei dem beschriebenen Verfahren bzw. dem Kommunikationssystem und der Kommunikationsvorrichtung wird vorteilhafterweise anstelle der wahlweisen Zuteilung von entweder Verkehrskanälen oder Signalisierungskanälen an Verbindungen in Funk-Kommunikationsnetzen eine gleichzeitige und abhängige Optimierung vorgenommen.

Ein Ausführungsbeispiel wird nachfolgend anhand der Zeichnung näher erläutert. Es zeigen:

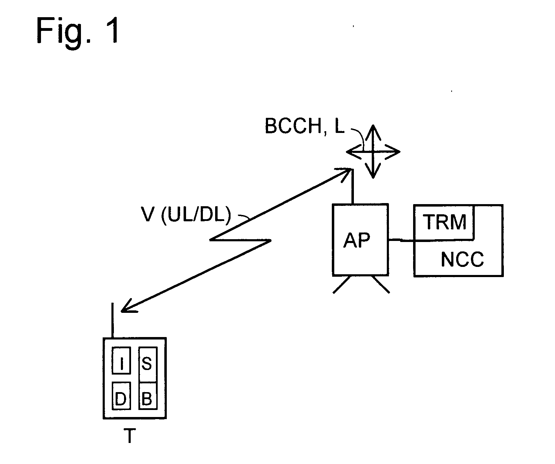

Fig. 1    schematisch die Anordnung eines Terminals, das mit einer Netzeinrichtung kommuniziert und

Fig. 2    Elemente eines solchen Terminals zur Verdeutlichung von dessen Funktionalität.

Bei verschiedenartigsten, insbesondere zellularen Funk-Kommunikationssystemen kommunizieren eine oder mehrere stationäre bzw. mobile Stationen, nachfolgend als Terminal T bezeichnet, mit einem netzseitigen Zugriffspunkt AP. Der netzseitige Zugriffspunkt AP (Access Point) kann dabei beispielsweise eine Basisstation mit Funkschnittstelle eines terrestrischen Funk-Kommunikationssystems sein, kann aber auch ein Satellit in einer Erdumlaufbahn sein. Der netzseitige Zugriffspunkt AP ist mit zentralen Netz-Steuereinrichtungen, insbesondere einem Netz-Steuerzentrum NCC (Network Control Center) verbunden, um eine netzweite Koordinierung von Funkzugriffen und Funkverbindungen zu ermöglichen. Während bei terrestrischen Funk-Kommunikationssystemen von einer oder mehreren zentralen Netz-Steuereinrichtungen eine Vielzahl räumlich verteilter Zugriffspunkte koordiniert und betreut wird, kann eine solche Netz-Steuereinrichtung auch direkter Bestandteil eines Zugriffspunktes AP sein, was beispielsweise bei Satelliten gestützten Systemen zweckmäßig sein kann.

Die Zugriffspunkte AP senden in der Regel auf einem Rundfunkkanal BCCH (Broadcast Control Channel) Steuersignale aus, mit denen den Terminals T allgemeine Informationen über das Funksystem mitgeteilt werden. Ein Terminal T, dass eine Verbindung aufnehmen möchte, meldet sich durch Zugriff auf beispielsweise einem Direktzugriffskanal für zufällige Zugriffe bei dem Zugriffspunkt AP an. Die zentrale Netz-Steuereinrichtung NCC überprüft daraufhin die Netzauslastung und weist dem Terminal T, sofern freie Kapazitäten entsprechend den Anforderungen verfügbar sind, entsprechende Netz-Ressourcen, z. B. Zeitschlitze, zu. Diese Zeitschlitze sind dann wiederum aufgeteilt in Zeitschlitze für Übertragungen in Aufwärts- bzw. Vorwärtsrichtung UL (Uplink) von einem Terminal zu dem Zugriffspunkt AP bzw. aufgeteilt in Zeitschlitze für Verbindungen in Abwärtsrichtung bzw. Rückwärtsrichtung DL (Downlink) in umgekehrter Richtung.

Bei dem nachfolgend beschriebenen Verfahren werden gemäß einer bevorzugten Ausführungsform sowohl die Zuteilung von Ressourcen, das heißt in der Regel Verkehrskanälen und Zeitschlitzen, an Verbindungen als auch die Nutzung von Signalisierungskanälen durch Dezentralisierung der Zeitschlitzvergabe bzw. Ressourcenzuweisung unter Benutzung von Terminalkenngrößen und bedingt Netzkenngrößen optimiert. Eine Anwendung ist vorteilhafterweise bei verschiedenartigsten Funk-Telekommunikationsnetzen möglich, bei denen mehrere Verbindungen gleichzeitig mittels Multiplexverfahren über ein und dieselbe Übertragungsstrecke vom Terminal T zum Zugriffspunkt AP geführt werden. Die Vielzahl möglicher Verbindungen kann dabei auf eine Vielzahl von Verbindungen zwischen mehreren Terminals T und einem Zugriffspunkt AP oder benachbarten Zugriffspunkten bezogen sein, kann aber auch auf mehrere Verbindungen bezogen sein, die von einem einzelnen Terminal T aus gleichzeitig geführt werden.

Bei dem nachfolgend beschriebenen bevorzugten Verfahren soll durch Einbeziehung von statistischen und dynamischen Terminalkenngrößen und Netzkenngrößen das Netz-Steuerzentrum NCC signalisierungsmäßig entlasten werden, um die Verzögerung beim Bearbeiten des Verbindungswunsches für statistisch eine Vielzahl von Terminals T herabzusetzen. Terminalkenngrößen können dabei z.B. die maximal mögliche Datenrate des Terminals T, die Zahl der gleichzeitig an diesem Terminal T aktiven Verbindungen oder die Summe der Datenrate dieser Verbindungen sein. Netzkenngrößen können beispielsweise Kenngrößen der Übertragungsstrecke, eine Information über Belastung von Übertragungsstrecken, die von diesem Terminal T für den Verbindungswunsch verwendet werden, oder statistische Netzgrößen sein. Zwar kann sich für das einzelne Terminal T eine Verschlechterung ergeben, jedoch erhöht sich statistisch der Gesamtdurchsatz im Netz, was eine allgemein verbesserte Ausnutzung der Netz-Ressourcen und eine verbesserte Schnittstelle für den Benutzer durch geringere Verzögerungen ermöglicht. Dem Verfahren liegt dabei die Annahme zugrunde, dass statistische Terminalgrößen im Terminal T insbesondere hardwaremäßig fixiert sind und dynamische Terminalkenngrößen je nach Bedarf und optional softwaremäßig, auch unter Einbeziehung von Zulassungsverfahren von Verbindungen, ausgewertet werden können. Dadurch ergibt sich ein große Flexibilität.

Allgemeine Schritte beim Aufbau einer Verbindung sind beim bevorzugten Verfahren wie folgt: Wenn ein Verbindungswunsch im Terminal T generiert oder von extern gefordert wird, beispielsweise aus einem übergeordneten Netz an einem Terminal T mit Gateway-Funktionalität, so werden in einem ersten Schritt die statischen und dynamischen Terminalkenngrößen in Kombination mit den Charakteristika des Verbindungswunsches, insbesondere der maximalen Datenrate herangezogen, um über den Verbindungswunsch zu entscheiden. Bei einem besonders einfach gestalteten Verfahren sind dieser und allen folgenden Schritte einfache Ja/Nein-Entscheidungen.

Im zweiten und den folgenden Schritten können optional dynamische Netzkenngrößen mit zunehmender Verfeinerung verwendet werden, um die erste Ja/Nein-Entscheidung zu bekräftigen oder zu annullieren. Die Auswertung der Netzkenngrößen kann dabei vorteilhafterweise softwaremäßig erfolgen. Bei der Auswertung verschiedener Kenngrößen können die Schritte vorteilhafterweise auch parallel verarbeitet werden, soweit sie auf von einander unabhängige Entscheidungen, insbesondere Ja/Nein-Entscheidungen hinauslaufen.

Nach dem Durchlauf aller Entscheidungsprozesse wird mittels einer "Und"-Verknüpfung aller Einzelentscheidungen der Verbindungswunsch an den Zugriffspunkt AP und über diesen ans Netz-Steuerzentrum NCC gesendet oder abgewiesen, falls bereits im Terminal T erkennbar ist, dass ein Verbindungsaufbau aufgrund einer zu hohen Netzauslastung nicht möglich oder nur in geringem Maße wahrscheinlich ist.

Am Beispiel der Spitzen-Datenrate PDR (Peak Data Rate) als beispielhafte Kenngröße wird ein solches Verfahren nachfolgend näher betrachtet. Das Ziel besteht darin, unter Berücksichtigung der Spitzen-Datenraten in Aufwärtsrichtung aller aktiven Verbindungen einer Dienste-Trägergruppe oder einer Aufwärtsrichtungs-Trägergruppe einen Auslastungspegel bzw. Auslastungsgrad (Congestion Level) L zu berechnen. Die Berechnung erfolgt zweckmäßigerweise zentral in der Einheit, die einen Überblick über die existierenden Verbindungen hat, also vorteilhafterweise einem Verkehrsressourcenmanager TRM (Traffic Resource Manager), z. B. an Bord eines Satelliten, wo die Zuordnung der einzelnen Terminals T zur Dienste-Trägergruppe oder Aufwärtsverbindungs-Trägergruppe sowie die jeweils momentan verwendeten Ressourcen, insbesondere Zeitschlitze, pro Terminal T bekannt sind. Bei einem Pool aus j aktiven Terminals T pro Dienste-Trägergruppe bzw. Aufwärtsverbindungs-Trägergruppe und k Verbindungen pro Terminal T ergibt sich der Auslastungsgrad L insbesondere aus dem Quotienten der für den Verkehr vorhandenen Kapazität $C_{SCG}$, z.B. für die Dienste-Trägergruppe SCG in Zeitschlitzen ausgedrückt, und der zu diesem bestimmten Zeitpunkt für aktive Verbindungen verwendeten Kapazität $C_{Traffic}$ der Dienste-Trägergruppe bzw. Aufwärtsverbindungs-Trägergruppe, dies unter Einbeziehung des Verbindungswunsches und ebenfalls in Zeitschlitzen ausgedrückt. Diese Berechnung erfolgt dabei proportional zur Spitzen-Datenrate PDR, wie dies auch der Formel zu entnehmen ist:

$$L \;=\; \frac{C_{Traffic}}{C_{SCG}} \;=\; \frac{\sum\limits_{m=1}^{j}\left(\sum\limits_{n=1}^{k} PDR_{fwd,\ nm}\right)}{C_{SCG}} \;\leq\; 1$$

Der bestimmte Auslastungsgrad L wird vom Zugriffspunkt AP über beispielsweise einen Rundfunkkanal BCCH auf Anforderung oder periodisch an die im Sendebereich befindlichen Terminals T übermittelt.

Derartige Auslastungsinformationen können auch mittels vorhandener Signalisierungsnachrichten im Zuge des Auf- und Abbaus anderer am Terminal T aktiver Verbindung vom Netz-Steuerzentrum NCC zum Terminal T gesendet werden. Das Terminal T kann somit idealerweise vor einer Verbindungsaufnahme oder beim Aufsynchronisieren den Auslastungsgrad L empfangen. Mit dem Auslastungsgrad L hat das Terminal T eine direkte Information über das Verhältnis zwischen vorhandener und verwendeter Kapazität, was einem prozentualen Faktor der momentanen Auslastung der Ressourcen in der Dienste-Trägergruppe SCG bzw. der Aufwärtsverbindungs-Trägergruppe UCG entspricht.

Beispielsweise können 3 Auslastungsgrade L zur Unterscheidung gewisser Verkehrssituationen und Verbindungschancen unterschieden werden, wobei bei der Verwendung von 3 Auslastungsgraden zur Signalisierung 2 Bit genügen. Beispielsweise kann ein Auslastungsgrad L = 0,85 als normale Auslastung einem Level 1 zugeordnet werden, ein Auslastungsgrad von 0,85 ≤ L < 0,95 kann einer Überbelastungssituation mit einem Level 2 zugeordnet werden und ein Auslastungsgrad von 0,95 ≤ L ≤ 1,0 kann einer Vollauslastungssituation mit einem Level 3 zugeordnet werden.

Von dem Terminal T wird ein Verbindungsaufbauwunsch oder ein neuerlicher Kapazitätsanforderungswunsch für eine schon bestehende aber im Off-Zustand befindliche Verbindung nur akzeptiert, wenn ein gewisser Auslastungsgrad L für eine Dienste-Trägergruppe oder eine Aufwärtsverbindungs-Trägergruppe und/oder eine einzelne Abwärtsverbindung DL nicht überschritten wird. Bei der Auswertung des Auslastungspegels ist auch eine Priorisierung möglich. Verbindungen mit höherer Priorität werden beispielsweise bis zum Auslastungspegel Pegel 2 oder sogar Pegel 3 akzeptiert. Verbindungen mit niedrigerer Priorität jedoch nur bis zum Auslastungspegel Pegel 1. Akzeptiert heißt in diesem Zusammenhang, dass der Verbindungsaufbauwunsch oder der neuerliche Kapazitätsanforderungswunsch für eine schon bestehende Verbindung von dem Terminal T überhaupt erst zum Zugriffspunkt AP und über diesen an das Netz-Steuerzentrum NCC bzw. den Verkehrsressourcenmanager (TRM: Traffic Ressource Manager) weitergeleitet wird. Der Verkehrsressourcenmanager bzw. das Netz-Steuerzentrum NCC können dann z. B. mit Hilfe von statistischen Verfahren zur Verbindungszulassung (Connection Admission) über die weitere Zulassung des Verbindungswunsches entscheidet.

Als Nebenbedingung für die Zulassung eines Verbindungswunsches im Terminal T kann auch eingeführt werden, dass die Summe der Spitzen-Datenraten PDR, insbesondere in Zeitschlitzen ausgedrückt, aller k an einem Terminal T aktiven Verbindungen unter Einbeziehung der gewünschten Verbindung kleiner sein muss, als die gesamte Datenrate DR, welche dem Terminal T zur Verfügung steht. Andernfalls wird der Verbindungswunsch entweder gleich abgelehnt, z.B. für real-time CBR- oder VBR-Verbindungen, oder nach einer minimalen konfigurierbaren Wartezeit abgelehnt, z.B. bei non real-time VBR-Verbindungen, , falls keine Zeitschlitze mehr für das Terminal T zur Verfügung stehen, wie auch der Formel zu entnehmen ist:

$$\sum_{n=1}^{k} PDR_n \ \leq \ DR$$

Während das Verfahren am Beispiel eines Verbindungswunsches vom Terminal T zu dem Zugriffspunkt AP hin beschrieben wurde, ist eine Anwendung auch in umgekehrter Richtung möglich. Die Entscheidung für Aufwärts- und Abwärtsrichtung kann dabei insbesondere unabhängig getroffen werden. Bei der ersten Formel ist dabei der Wert der Spitzen-Datenrate PDR(fwd) (fwd: forward direction/Vorwärtsrichtung) durch PDR(bwd) (bwd: backward direction/ Rückwärtsrichtung) und $C_{SCG}$ durch die in Abwärtsverbindung zur Verfügung stehende Kapazität $C_{DL}$ zu ersetzen. Insbesondere bei stark asymmetrischen Verbindungen (PDR(bwd) >> PDR(fwd)) und bei Rundfunksendungen oder Multicast-Verbindungen wird dieser Aspekt stärker ins Gewicht fallen.

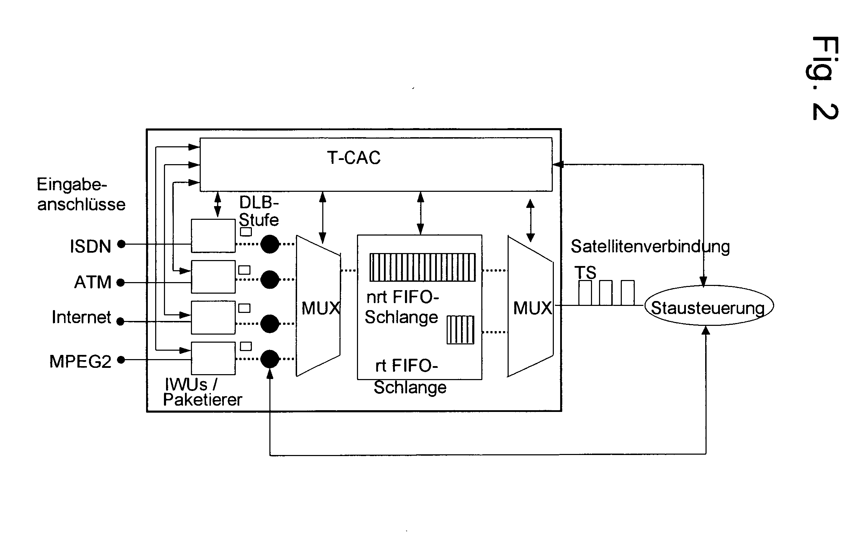

Wie aus Fig. 2 ersichtlich, die einen Ausschnitt der Einrichtungen eines mobilen Terminals T zeigt, kann das beispielhafte Terminal Daten verschiedener Dienste ISDN, ATM, Internet und MPEG2 verarbeiten, die hier auf Eingangsleitungen skizziert sind. Die hereinkommenden Daten werden jeweils für sich einer Vorverarbeitung unterzogen und dann einem Multiplexer MUX zugeführt. Dessen Ausgang führt die multiplexten Daten zwei FIFO-Warteschlangen (FIFO: First In First Out) zu, einer Warteschlange für Daten hoher Dienstegüte QoS (Quality of Service), also insbesondere für Echtzeitdienste rt (real time), und einer Warteschlange für Daten mit niedriger Dienstegüte, also insbesondere Nicht-Echtzeitdienste nrt (non-real time). Die Ausgänge der Warteschlangen werden wiederum einem Multiplexer MUX zugeführt, der eine Zusammenführung der Daten beider Warteschlangen für eine Übertragung auf der Schnittstelle V durchführt.

Zur Koordinierung des gesamten Ablaufes dient eine Steuereinrichtung T-CAC. Zum Durchführen des vorstehend beschriebenen Verfahrens erfasst die Steuereinrichtung T-CAC im Terminal T zusätzlich Verbindungsanforderungen unter Berücksichtigung der geforderten Dienstegüte bzw. Kapazität. Ferner führt sie den Vergleich der geforderten bzw. zusätzlich geforderten Verbindungskapazität mit der gemäß dem von dem Zugriffspunkt AP erfahrenen Auslastungsgrad L Kapazität durch, die im Kommunikationssystem für diese Schnittstelle verfügbar sein müsste. Kann die Kapazität bereitgestellt werden, so leitet das Terminal T die Verbindungsanforderung an den Zugriffspunkt AP weiter. Andernfalls weist das Terminal T die Verbindungsanforderung zurück.

Die Steuereinrichtung T-CAC führt die dazu erforderlichen Schritte unter Berücksichtigung einer Vielzahl von Faktoren und Parametern durch. Parameter können z.B. für die einzelnen Dienste oder Warteschlangen maximal tolerierbare Wartezeiten oder Schwellenwerte sein.

Zur Reduktion der Zahl der Aktualisierungen des Wertes für den Auslastungsgrad im Terminal z. B. bei zeitlich stark variierenden Werten des Auslastungsgrades L, kann es sich auch als vorteilhaft erweisen, mehr als einen Wert für den Auslastungsgrad L im Terminal T selbst zu speichern, um dadurch zu ermöglichen, den gegenwärtigen Auslastungsgrad durch numerische Extrapolation selbst zu berechnen.

**Patentansprüche**

1. Verfahren zum Zuweisen von Ressourcen zu einer Kommunikationsverbindung (V; UL, DL) in einem Kommunikationssystem, bei dem

   - eine erste Station (T) über eine Schnittstelle (V; UL, DL) eine Ressourcenanforderung zu einer mit der ersten Station (T) kommunikationsfähigen zweiten Station (AP) überträgt, und
   - nach dem Empfang der Ressourcenanforderung auf der Seite der zweiten Station (AP) in einer Steuereinrichtung (TRM; NCC) die Ressourcenanforderung zurückgewiesen oder Ressourcen zugewiesen werden,

   **dadurch gekennzeichnet,**

   - **dass** von der zweiten Station (AP) eine Information über einen aktuellen Auslastungsgrad (L) der verfügbaren Ressourcen ausgesendet wird,
   - **dass** die erste Station (T) vor dem Übertragen der Ressourcenanforderung anhand der Information über den Auslastungsgrad (L) bestimmt, ob eine Zuweisung der angeforderten Ressourcen erfolgen kann, und
   - **dass** die erste Station (T) die Ressourcenanforderung abhängig von dem Ergebnis der Bestimmung zu der zweiten Station (AP) überträgt oder nicht überträgt.

2. Verfahren nach Anspruch 1, bei dem
   die Information über den Auslastungsgrad (L) der verfügbaren Ressourcen auf Anforderung und/oder ohne Anforderung durch die erste Station (T) von der zweiten Station ausgesendet wird.

3. Verfahren nach Anspruch 1 oder 2, bei dem
   die Ressourcenanforderung im Fall der Bestimmung, dass die Zuweisung der erforderlichen Ressourcen nicht oder nicht ausreichend wahrscheinlich erfolgen wird, bereits von der ersten Station (T) zurückgewiesen wird.

4. Verfahren nach einem vorstehenden Anspruch, bei dem
   bei der Bestimmung Diensten verschiedene Auslastungsgrade (L; Level 1, Level 2, Level 3) zugeordnet werden, bei denen die Zuweisung der angeforderten Ressourcen erfolgt bzw. nicht erfolgt.

5. Verfahren nach einem vorstehenden Anspruch, bei dem

   - das von der zweiten Station (AP) oder einer anderen mit der Steuereinrichtung (TRM; NCC) verbundenen Station erfolgende Aussenden der Information über den Auslastungsgrad (L) der verfügbaren Ressourcen entweder direkt an die erste Station (T) oder an eine dazu benachbarte Station erfolgt, wo diese Information von der ersten Station (T) abgeholt wird, oder
   - die erste Station (T) von der zweiten Station (AP) oder einer anderen mit der Steuereinrichtung (TRM; NCC) verbundenen Station die Information über den Auslastungsgrad (L) aktiv abruft.

6. Verfahren nach einem vorstehenden Anspruch, bei dem die Information über den Auslastungsgrad (L) als Zahlenwert oder als codierte Information ausgesendet wird.

7. Verfahren nach einem vorstehenden Anspruch, bei dem die Information über den Auslastungsgrad (L) in der ersten Station (T) gespeichert und bis zum Empfang einer aktuelleren Information über den Auslastungsgrad (L) für die Bestimmung verwendet wird.

8. Verfahren nach einem vorstehenden Anspruch, bei dem in der ersten Station (T) überprüft wird, ob die Summe der erforderlichen Ressourcen für alle Verbindungen und angeforderten Verbindungen kleiner oder gleich der gesamten für die erste Station (T) verfügbaren Ressourcen ist.

9. Verfahren nach einem vorstehenden Anspruch, bei dem die Information über den Auslastungsgrad (L) als Quotient der verwendeten Ressourcen ($C_{Traffic}$) und der verfügbaren Ressourcen ($C_{SCG}$), insbesondere unter Berücksichtigung der Summe aller Spitzen-Datenraten (PDR) der aktiven Verbindungen bestimmt wird gemäß

$$L = \frac{C_{Traffic}}{C_{SCG}} = \frac{\sum\limits_{m=1}^{j}\left(\sum\limits_{n=1}^{k} PDR_{fwd,\ nm}\right)}{C_{SCG}} \leq 1$$

**10.** Kommunikationssystem, mit

- zumindest einer ersten Station (T) mit einer Steuereinrichtung (S) für deren Betrieb,
- zumindest einer zweiten Station (AP),
- einer Schnittstelle zum Aufbauen zumindest einer Kommunikationsverbindung (V; UL, DL) zwischen der ersten Station (T) und der zweiten Station (AP) nach einer Ressourcenanforderung durch die erste Station (T), und
- einer mit der zweiten Station (AP) verbundenen Steuereinrichtung (TRM; NCC) zum Zuweisen von Ressourcen für die aufzubauende Kommunikationsverbindung (V; UL, DL),

**dadurch gekennzeichnet,**

- **dass** die Steuereinrichtung (TRM; NCC) zum Zuweisen von Ressourcen zum Aussenden einer Information über einen aktuellen Auslastungsgrad (L) der verfügbaren Ressourcen über die zweite Station (AP) ausgelegt ist,
- **dass** eine Steuereinrichtung (S) der ersten Station (T) vor dem Übertragen der Ressourcenanforderung abhängig von den Informationen über den aktuellen Auslastungsgrad (L) bestimmt, ob eine Zuweisung der angeforderten Ressourcen erfolgen kann, und
- die Steuereinrichtung (S) der ersten Station (T) abhängig von dem Ergebnis der Bestimmung die Übertragung der Ressourcenanforderung initiiert oder nicht.

**11.** Kommunikationsvorrichtung (T), mit

- einer Steuereinrichtung (S) für deren Betrieb,
- einer Schnittstelleneinrichtung (I) zum Aufbauen zumindest einer Kommunikationsverbindung (V; UL, DL) über eine Schnittstelle zu einer zweiten Station (AP) nach einer Ressourcenanforderung, und
- einem Speicher (D) zum Abspeichern von Daten,

**dadurch gekennzeichnet,**

- **dass** der Speicher (D) einen Speicherraum für eine empfangene Information über einen aktuellen Auslastungsgrad (L) der verfügbaren Ressourcen aufweist, und
- **dass** die Steuereinrichtung (S) eine Bestimmungseinrichtung (B) aufweist, die vor der Ressourcenanforderung anhand der Information über den Auslastungsgrad (L) bestimmt, ob eine Zuweisung der erforderlichen Ressourcen erfolgen kann, wobei die Steuereinrichtung (S) abhängig von dem Ergebnis der Bestimmung die Übertragung der Ressourcenanforderung über die Schnittstelleneinrichtung (I) zu der zweiten Station (AP) initiiert oder nicht.

# Fig. 1

EP 1 280 364 A1

# Fig. 2

9

EP 1 280 364 A1

## EUROPÄISCHER RECHERCHENBERICHT

**Europäisches Patentamt**

Nummer der Anmeldung

EP 01 11 8355

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 028 851 A (PERSSON A H ET AL) 22. Februar 2000 (2000-02-22) * Spalte 2, Zeile 60 - Spalte 3, Zeile 11 * * Spalte 5, Zeile 33 - Spalte 6, Zeile 15 * | 1-8,10, 11 | H04Q3/00 H04B7/185 H04Q7/38 |
| A | | 9 | |
| X | WO 99 67965 A (SIEMENS AG) 29. Dezember 1999 (1999-12-29) * Seite 8, Zeile 24 - Seite 10, Zeile 20 * | 1-8,10, 11 | |
| A | | 9 | |
| X | EP 0 889 663 A (NTT MOBILE COMMUNICATIONS NETWORK INC) 7. Januar 1999 (1999-01-07) * Spalte 1, Zeile 5 - Zeile 11 * * Spalte 3, Zeile 23 - Zeile 29 * * Spalte 4, Zeile 6 - Spalte 5, Zeile 44 * | 1-3,5-8, 10,11 | |
| A | | 4,9 | |
| E | WO 01 65721 A (MOTOROLA INC) 7. September 2001 (2001-09-07) * das ganze Dokument * | 1-7,10, 11 | RECHERCHIERTE SACHGEBIETE (Int.Cl.7) H04Q H04B |
| A | TSINGOTJIDIS P ET AL: "Proactive congestion controls for the support of variable bit rate services on broadband satellite networks-a feasibility study" COMPUTER COMMUNICATIONS, Bd. 22, Nr. 1, 15. Januar 1999 (1999-01-15), Seiten 20-29, XP004157089 ISSN: 0140-3664 * das ganze Dokument * | 1-11 | |

Der vorliegende Recherchenbericht wurde für alle Patentansprüche erstellt

| Recherchenort | Abschlußdatum der Recherche | Prüfer |
|---|---|---|
| DEN HAAG | 20. Dezember 2001 | Vercauteren, S |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 01 11 8355

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-12-2001

| Im Recherchenbericht angeführtes Patentdokument | | Datum der Veröffentlichung | Mitglied(er) der Patentfamilie | | Datum der Veröffentlichung |
|---|---|---|---|---|---|
| US 6028851 | A | 22-02-2000 | AU | 9287498 A | 23-04-1999 |
| | | | BR | 9812836 A | 08-08-2000 |
| | | | CN | 1271504 T | 25-10-2000 |
| | | | EP | 1018280 A1 | 12-07-2000 |
| | | | JP | 2001518770 T | 16-10-2001 |
| | | | WO | 9917582 A1 | 08-04-1999 |
| WO 9967965 | A | 29-12-1999 | DE | 19827916 A1 | 05-01-2000 |
| | | | WO | 9967965 A1 | 29-12-1999 |
| | | | EP | 1090526 A1 | 11-04-2001 |
| | | | US | 2001003095 A1 | 07-06-2001 |
| EP 0889663 | A | 07-01-1999 | EP | 0889663 A1 | 07-01-1999 |
| | | | JP | 3112173 B2 | 27-11-2000 |
| | | | CA | 2247363 A1 | 09-07-1998 |
| | | | CN | 1214182 A | 14-04-1999 |
| | | | WO | 9830057 A1 | 09-07-1998 |
| WO 0165721 | A | 07-09-2001 | US | 2001034235 A1 | 25-10-2001 |
| | | | WO | 0165721 A1 | 07-09-2001 |

EPO FORM P0461

Für nähere Einzelheiten zu diesem Anhang : siehe Amtsblatt des Europäischen Patentamts, Nr. 12/82